**Europäisches Patentamt**

**European Patent Office**

**Office européen des brevets**

(19)

(11) Publication number : **0 308 464 B1**

## EUROPEAN PATENT SPECIFICATION

(12)

(45) Date of publication of patent specification :
**29.04.92 Bulletin 92/18**

(51) Int. Cl.$^5$ : **H04N 1/40**

(21) Application number : **88903108.4**

(22) Date of filing : **09.03.88**

(86) International application number :
**PCT/US88/00875**

(87) International publication number :
**WO 88/07306 22.09.88 Gazette 88/21**

(54) **SYSTEM FOR PRODUCING DITHERED IMAGES FROM CONTINUOUS-TONE IMAGE DATA.**

(30) Priority : **17.03.87 US 26588**

(43) Date of publication of application :
**29.03.89 Bulletin 89/13**

(45) Publication of the grant of the patent :
**29.04.92 Bulletin 92/18**

(84) Designated Contracting States :
**AT BE CH DE FR GB IT LI LU NL SE**

(56) References cited :
**US-A- 4 449 150**
**Proceedings of the SID, vol. 24, no. 3, 1983,**
**SID, (Los Angeles,US),C. Billotet-Hoffmann et**
**al.: "On the error diffusion technique for elec-**
**tronic halftoning", pages 253-258**

(56) References cited :
**Proceedings of the SID, vol. 17/2, 2nd. quarter**
**1976, (Los Angeles,US), R.W. Floyd et al.: "An**
**adaptive algorithm for spatial grays-**
**cale",p.75-77**

(73) Proprietor : **DIGITAL EQUIPMENT**
**CORPORATION**
**146 Main Street**
**Maynard, MA 01754 (US)**

(72) Inventor : **ULICHNEY, Robert, A.**
**17 Healy Street**
**Cambridge, MA 02140 (US)**

(74) Representative : **Goodman, Christopher et al**
**Eric Potter & Clarkson St. Mary's Court St.**
**Mary's Gate**
**Nottingham NG1 1LE (GB)**

## Description

## BACKGROUND OF THE INVENTION

### 1. Field of the Invention

The invention relates generally to the field of digital data processing systems, and more specifically to systems for processing bits representing digitized images to produce perceptually similar images with fewer bits than the original.

### 2. Description of the Prior Art

A problem in digital image processing is the vast amount of data, expressed in binary digits or "bits", which are used to describe a digital image. Digital images are defined in terms of picture elements, or "pixels", with each pixel being the smallest unit of an image which the data processing system can process and display. Depending on the size of the image and the resolution, a low-resolution two-dimensional rectangular image may have as few as several tens or a hundred pixels on a side, and some high-resolution images have as many as a thousand or more pixels on a side.

Depending on a number of factors, each pixel may also have as many as eight, sixteen or more bits of data in a "continuous-tone" image. In a monochrome image, the data associated with each pixel typically identifies a "luminance" level, which is a measure of the brightness of the pixel. In a color image, the data may also identify various color components and their relative brightness in the pixel. For example, in a some monochrome displays, each pixel may be black (a low luminance level) or white (a high luminance level), or it may have these plus a number of intermediate, or "gray", brightness levels. The luminance of a pixel is typically expressed as a binary encoded value, such that if, for example, eight bits are used to encode each pixel, the luminance of the pixel may have up to two hundred fifty six (that is, $2^8$) different gray levels, including the black and white extremes. If the image has several colors, bits must also be used to identify the color, and, perhaps, the relative brightness level of each color in the pixel.

While an image may be defined in terms of its "continuous-tone" image values, in which each pixel is defined by eight or more bits of data, display devices such as video display terminals and printers normally can only accommodate one or at most a few bits of data for each pixel to define the luminance of the displayed pixel. Images in which a pixel's luminance is defined by one bit per pixel are termed "halftone" images, while, more generally, images in which the pixel luminance is defined by one or only a few bits of data (but fewer bits than are required for the continuous tone image) are termed "dithered" images. The continuous tone image data is processed to generate the output luminance values for the pixels ("pixel values") to define the halftone or dithered image for the display device.

Several techniques have been developed to generate pixel values so that the image as rendered by the display device is perceptually similar to the actual image. One popular technique for producing halftone image data makes use of an "error diffusion" algorithm described in R.W. Floyd, et al., "An Adaptive Algorithm for Spatial Greyscale", Proceeding of the S.I.D., Vol. 17/2, Second Quarter, 1976. In that technique, the continuous-tone image is processed pixel by pixel to produce halftone output values for each pixel. The pixels are processed line by line from the top of the image to the bottom of the image. The processing takes place in a raster pattern, that is, from left to right in each line. In processing each pixel, a correction value, which is related to previous processing of pixels in the image, is added to the continuous tone value to produce a modified pixel value. Based on the modified pixel value, an output pixel value is then assigned one of two halftone values to indicate to the display device whether it should display the pixel as white or black in the halftone image.

After the processed pixel is assigned the halftone output value, an error value is determined between the output pixel value and the modified pixel value. The error value represents the difference between the selected halftone value assigned to the pixel and the actual modified pixel value. The error values are used in calculating the correction value for subsequently processed pixels. The correction value which is used in calculating the modified pixel value of each pixel is related to sum of error values of nearby previously processed pixels, which have been multiplied by various predetermined weighting values. The weighting values have been empirically selected to produce halftone images which are perceptually similar to the continuous-tone images.

The point of the error diffusion technique is that the error values, which, generally speaking, relate to the difference between the white and black luminances in the output halftone image and the gray pixel levels in the original continuous tone image, are diffused as processing proceeds to the right and downwardly in the image. Thus, while the halftone pixel value of any given pixel may be considerably different from the continuous-tone pixel level, over a group of pixels the error tends to even out so that the halftone image is perceptually similar to the continuous tone image.

While the error diffusion technique produces fairly good images, from a perceptual standpoint, it does have several problems. The primary problem is that it tends to produce undesirable artifacts, such as directional structures, in the halftoned image which are not present in the original continuous tone image. These artifacts are usually present in portions of an image which have large areas of constant or slowly-varying luminance. In addition, the technique tends to sharpen abrupt edges in a unidirectional manner. The fact that error diffusion methods are known to behave in dependence a direction of the procedure in which the algorithm is applied is discussed in "Proceedings of S.I.D.", Vol 24, no 3, 1983, S.I.D. (Los Angeles, US), Billotet-Hofman et al.: "On the error diffusion technique for electronic half toning", p253-258.

## SUMMARY OF THE INVENTION

The invention provides an improvement to the error diffusion technique, producing images which perceptually approximate the to continuous-tone images with fewer undesirable artifacts than are present in images produced by prior error diffusion techniques. In particular, the images produced by the new technique do not contain the directional structures which are present in the prior techniques, and thus provides dithered images which are more perceptually similar to the original continuous tone images than are available from prior techniques..

In brief, in the new error diffusion technique, processing is performed bidirectionally on the input continuous tone pixel image data in lines from top to bottom (as seen in the image), with the processing in adjacent lines being in opposite directions. That is, in one line, the continuous tone pixel image data is processed from left to right (as seen in the image), and in the next line the continuous tone pixel image data is processed from right to left (as seen in the image). For each pixel, a modified pixel value is formed from the continuous-tone pixel value and a correction value. The correction value that is used corresponds to the error values of nearby previously-processed pixels, each multiplied by a weighting value, with the weighting values varying within selected ranges to introduce a small perturbation. The modified pixel value is then quantized to form a halftoned or dithered output pixel value, and an error value is determined as between the modified pixel value and the quantized value for use in determination of the pixel values for subsequently processed pixels.

The bidirectional processing and the perturbation in the weighting values essentially eliminate any of the directional image structures that were present in halftoned images generated by prior error diffusion techniques. Thus, an image produced by the new image processing system more perceptually approximates the continuous-tone image with fewer disturbing artifacts than an image produced by the prior techniques.

## BRIEF DESCRIPTION OF THE DRAWINGS

This invention is pointed out with particularity in the appended claims. The above and further advantages of this invention may be better understood by referring to the following description taken in conjunction with the accompanying drawings, in which:

Fig. 1 is a block diagram of an image processing system according to the present invention; and

Figs. 2A through 2C are diagrams of data structures represented in Fig. 1.

## DETAILED DESCRIPTION OF AN ILLUSTRATIVE EMBODIMENT

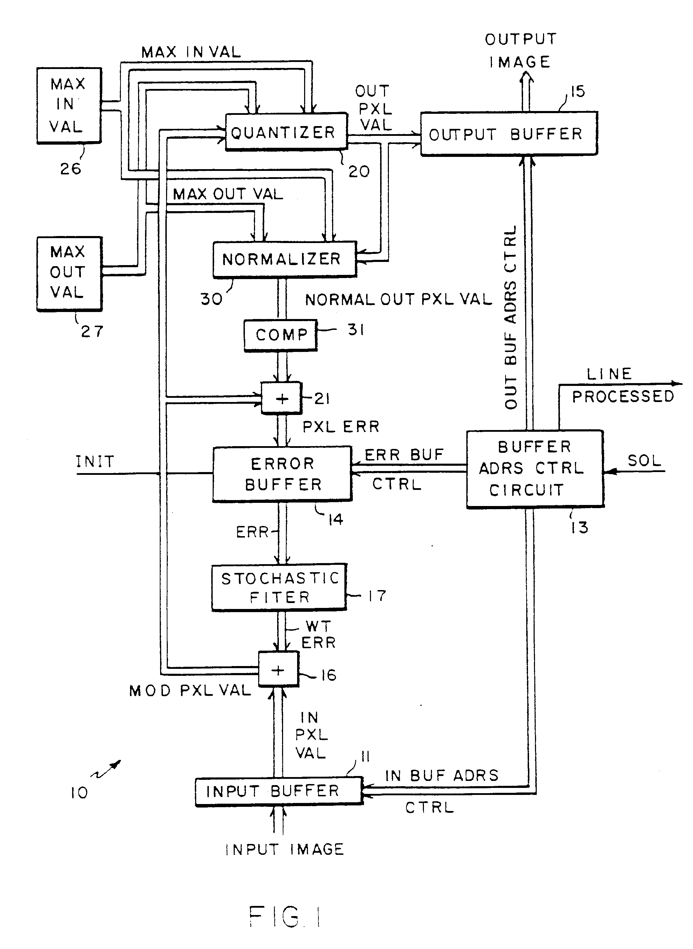

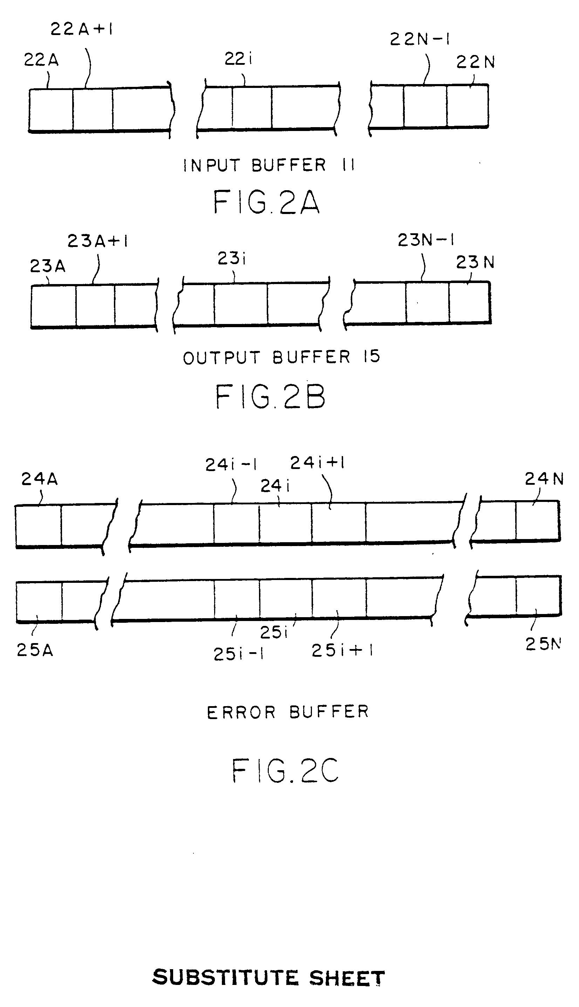

With reference to Fig. 1, an image processing system 10 in accordance with the invention includes an input buffer 11 which receives from an input source (not shown) luminance values ("pixel values") for a line of pixels in an image. The pixel values which are received in input buffer 11 are continuous tone values, and may include eight, sixteen or more bits of data per pixel. As depicted in Fig. 2A, the input buffer 11 includes "N" storage locations $22_A$ through $22_N$ for the "N" pixels in a line in the image, that is one storage location is provided per pixel. Storage location $22_A$ stores the continuous tone pixel value for the pixel at the left end of the line in the image and storage location $22_N$ stores the continuous tone pixel value for the pixel at the right end of the line. The storage locations between locations $22_A$ and $22_N$ store continuous tone pixel values for the pixels between the left end and the right end of the line, respectively.

Before or immediately after the input source has transferred the continuous tone pixel values for the first or uppermost line of pixels of an image into the input buffer, it asserts an INIT initialization signal which initializes an error buffer 14. Thereafter, after the input source has transferred the continuous tome pixel values for each line of pixels into the input buffer 11, it asserts an SOL start of line signal on a line 12. The SOL start of line signal is received by a buffer address control circuit 13, which is connected to and controls the input buffer 11, an error buffer 14, and an output buffer 15.

The output buffer 15 stores halftone or dithered pixel values for the pixels in the image line whose continuoustone pixel values are present in input buffer 11. As depicted in Fig. 2B, the output buffer 15, like the input buffer 11, comprises a set of storage locations $23_A$ through $23_N$, with one storage location being provided for each pixel in the image line. Thus, each storage location $23_i$ in the output buffer 15 is associated with one storage location $22_i$ in the input buffer 11, that is, they both are related to the same pixel, the $\underline{i}$th pixel, in the image line being processed by the system 10.

With reference to Fig. 2C, the error buffer contains two sets of storage locations $24_A$ through $24_N$ and $25_A$ through $25_N$, with each set having as many storage locations as the input buffer 11 or the output buffer 15. The error buffer stores, for each pixel, a value which is related to the difference between the halftone or dithered pixel value which system 10 determines for the pixel and a continuoustone pixel value.

As explained below, the contents of the error buffer are used in determining the halftone or dithered pixel values for subsequently processed pixel image data. Immediately after initialization, the contents of the storage locations $24_A$ through $24_N$ and $25_A$ through $25_N$ are all zero. Thereafter, storage locations $24_A$ through $24_N$ store the error values for the previously processed line of pixels, which, during processing of the first line of pixels are all zero. The storage locations $25_A$ through $25_N$ store the error values for the current line of pixels, that is, the line whose continuous tone pixel valves are currently in input buffer 11 and being processed by system 10. It will be appreciated that storage locations $25_A$ through $25_N$ may not be completely filled; they will have error values only so far as the pixels in the line have been processed by the system. As each storage location $22_i$ in input buffer 11 is processed, an error value is loaded into storage location $25_i$ in the error buffer 14.

When the SOL start of line signal is asserted, the buffer address control circuit 13 initiates processing on the pixel values that have been loaded into the input buffer 11. The buffer address control circuit 13 first selects a storage location $22_A$ or $22_N$ at one end (as depicted in Fig. 2A), and initiates processing on image data in that location. After each location is processed, the buffer address control circuit 13 steps to the next location in the input buffer 11, initiating processing on the pixel value at that location. This process continues until the pixel values in all of the storage locations $22_i$ have been processed, at which time the buffer address control circuit 13 asserts a LINE PROCESSED signal, which is received by downstream circuitry (not shown). At this point, the output buffer 15 contains halftone or dithered pixel values for the line in the image represented by the continuous tone pixel values in input buffer 11. In response to the LINE PROCESSED signal, the downstream circuitry may retrieve the contents of the output buffer 15 for display.

As has been described, the buffer address control circuit may begin processing the image data in input buffer 11 from the left most storage location $22_A$ or the right most storage location $22_N$. If, in processing one line, the buffer address control circuit 13 begins processing from the left most storage location $22_A$, in processing the next line it begins processing from the right most storage location $22_N$. In both cases, the buffer address control circuit 13 enables processing of the contents of the storage locations to the other end, that is, storage locations $22_N$ or $22_A$, respectively. Thus, processing over the image data representing the lines of an image proceeds in a "serpentine" manner.

It will be appreciated that, if the buffer address control circuit 13 enables processing of pixel values from left to right, that is, from storage location $22_A$ to storage location $22_N$ in the input buffer 11, it also enables output pixel values to be stored in the output buffer 15 from left to right, that is, from storage location $23_A$ to storage location $23_N$. Similarly, if the control circuit enables processing of pixel values from right to left, that is, from storage location $22_N$ to storage location $22_A$ in the input buffer, it also enables output pixel values to be stored in the output buffer 15 from right to left, that is, from storage location $23_N$ to storage location $22_A$. In addition, the particular storage locations $24_A$ through $24_N$ and $25_A$ through $25_N$ in error buffer 14 selected by the buffer address control circuit 13 depends on the direction in which the storage locations $22_A$ through $22_N$ in input buffer 11 are being processed.

To select a storage location $22_i$ in the input buffer 11, the buffer address control circuit 13 generates an INP BUF ADRS CTRL input buffer address control signal which identify the storage location. In response, the input buffer 11 transmits its contents as an IN PXL VAL input pixel value to one input of an adder 16.

Contemporaneously, the buffer address control circuit 13 transmits an ERR BUF CTRL error buffer control signal to the error buffer 14 to enable it to transmit error values from selected locations to a stochastic filter 17. In one embodiment, if the INP BUF ADRS CTRL input buffer address control signal identifies location $22_i$ in input buffer 11, the ERR BUF CTRL error buffer control signals identify locations $24_{i-1}$ through $24_{i+1}$, which contain error values from the previously processed pixel line, and either location $25_{i-1}$ or location $25_{i+1}$, which contain error values from the currently processed pixel line. If buffer address control circuit 13 began processing from the left most end of input buffer 11, and is stepping to the right, the ERR BUF CTRL error buffer control signal identifies storage location $25_{i-1}$. On the other hand, if buffer address control circuit 13 began processing from the right most end of input buffer 11, and is stepping to the left, the ERR BUF CTRL error buffer control signals identify storage location $25_{i+1}$.

The stochastic filter 17 receives all of the error values from locations in the error buffer 14 identified by the ERR BUF CTRL error buffer control signals, multiplies each of them by a weighting value, forms a sum of the products and transmits the result as an ERR error value to a second input of adder 16. Adder 16 then forms a sum which is a MOD PXL VAL modified pixel value for the pixel.

The MOD PXL VAL modified pixel value output from adder 16 is coupled to a quantizer 20 and one input of a second adder 21. The quantizer 20 receives the MOD PXL VAL modified pixel value and, based on that value, a MAX IN VAL maximum input value stored in a register 26 and a MAX OUT VAL maximum output value stored in a register 27, produces an OUT PXL VAL output pixel value which is stored in a storage location $23_i$ in the output buffer 15 corresponding to the storage location in the input buffer 11 being processed. The quantizer 20, based on the MAX OUT VAL maximum output value and MAX IN VAL maximum input value, establishes a range of modified pixel values to be assigned to each output pixel value. When it receives a MOD PXL VAL modified pixel value from the adder 16, it determines the corresponding range and transmits the associated OUT PXL VAL output pixel value.

The particular correspondence produced by the quantizer 20 between the MOD PXL VAL modified pixel value and the MAX IN VAL maximum input value and MAX OUT VAL maximum output value may be illustrated by several examples. In one example, the system 10 may receive input continuous tone pixel values having eight bits and produce output pixel values having one bit (thereby producing a "halftone" image). The input pixel values define two hundred and fifty six brightness levels from "0" through "255", with "0" representing black, "255" representing white, and "1" through "254" representing shades of gray between black and white. The output pixel values define two output pixel values "0" and "1", with "0" representing black and "1" representing white. The MAX IN VAL maximum input value corresponds to "255" and the MAX OUT VAL maximum output value corresponds to "1".

In that example, the quantizer 20 establishes two modified pixel ranges nominally centered around "0" and "255", with each range being associated with one of the two output pixel values. The difference between the nominal centers corresponds to the MAX IN VAL "255" divided by the MAX OUT VAL "1" (that is "255"), and the end points of the ranges is halfway between the respective nominal centers. Thus, the quantizer establishes a correspondence as follows:

| MOD PXL VAL | OUT PXL VAL | NOM. CENTER |
|---|---|---|
| 127.5 and below | 0 | 0 |
| Above 127.5 | 1 | 255 |

(Where "NOM. CENTER" indicates the nominal center of the respective ranges.) Thus, if the quantizer 20 receives a MOD PXL VAL modified pixel value of "127.5" or below, it transmits an OUT PXL VAL output pixel value "0", and if it receives a MOD PXL VAL modified pixel value above "127.5", it transmits an OUT PXL VAL output pixel value of "1".

In another example, system 10 may receive the same continuous tone input pixel values and produce a dithered image defined by output pixel values having two bits. The two output bits define four output pixel levels, with "0" and "3" representing black and white respectively, and "1" and "2" representing two shades of gray. The quantizer establishes four modified pixel ranges nominally centered around modified pixel values "0", "85", "170" and "255" each associated with one of the four output pixel values. The differences between the nominal centers corresponds to the MAX IN VAL "255" divided by the MAX OUT VAL "3" (that is "85"). Thus, the quantizer establishes a correspondence as follows:

| MOD PXL VAL | OUT PXL VAL | NOM. CENTER |
|---|---|---|
| 42.5 and below | 0 | 0 |
| Above 42.5 to 127.5 | 1 | 85 |
| Above 127.5 to 212.5 | 2 | 170 |
| Above 212.5 | 3 | 255 |

The OUT PXL VAL output pixel value produced by the quantizer 20 is stored in the ith storage location in the output buffer 15. The buffer address control circuit 13 produces OUT BUF ADRS CTRL output buffer address control signals which identify that location.

The OUT PXL VAL output pixel value from quantizer 20 is also transmitted, along with the MAX IN VAL maximum input value from register 26 and MAX OUT VAL maximum output value from register 27 to a normalizer 30. The normalizer 30 produces a NORM OUT PXL VAL normalized output pixel value by dividing the MAX IN VAL maximum input value by the MAX OUT VAL maximum output value and multiplying the result by the OUT PXL VAL output pixel value. Essentially, the NORM OUT PXL VAL normalized output pixel value produced by the normalizer 30 corresponds to the nominal center of the range used by the quantizer 20 which is associated with the OUT PXL VALUE output pixel value.

The NORM OUT PXL VAL normalized output pixel value produced by the normalizer 30 is negated in a complement circuit and coupled to the second input of adder 21. The output of adder 21, a PXL ERR pixel error value, corresponds to the difference between the nominal center value produced by the normalizer 30 and the MOD PXL VAL modified pixel value produced by adder 16. The PXL ERR pixel error value is coupled to the error buffer for storage in the storage location $25_i$ associated with the input buffer location $22_i$ being processed.

After the output of the adder 21 is stored in the appropriate storage location $25_i$ in the error buffer 14, the next pixel may be processed, that is, the pixel whose continuous-tone value is stored in storage location $22_{i+1}$ or $22_{i-1}$, depending on the direction in which the line of pixels whose pixel values are stored in input buffer 11 is being processed.

The system 10 performs the above-described operation on each of the storage locations $22_A$ through $22_N$ in input buffer 11. As noted above, after the entire line of pixels has been processed, the buffer address control circuit 13 asserts the LINE PROCESSED signal, which is received by external circuitry (not shown). At that point the external circuitry may remove the contents of output buffer 15 and insert continuous tone pixel values for a new line of pixels in input buffer 11. The buffer address control circuit 10 also enables the contents of storage locations $25_A$ through $25_N$ (Fig. 2C) in the error buffer 14 to be shifted into locations $24_A$ through $24_N$, which may be accomplished either by a physical shifting as between the two sets of storage locations, or by adjusting pointers which identify the two sets of storage locations. The system 10 is then ready to process another line of pixel image data.

As has been described above, the stochastic filter produces a sum of the products of the contents of selected locations in error buffer 14, multiplied by several weighting values. In stochastic filter 17, the weighting values are as follows:

$$w_1 = 7/16 + b$$
$$w_2 = 1/16 + a$$
$$w_3 = 5/16 - b$$
$$w_4 = 3/16 - a$$

where a and b are perturbation values selected at random or each of the pixels, with

$$-1/32 < a < 1/32$$
$$-1/8 < b < 1/8.$$

The nominal weighting values (that is, the values without the perturbations) and the ranges of the perturbation values are empirically determined values which provide perceptual similarity of a dithered image to the continuous tone image. The perturbation values are selected in a random or pseudorandom manner for each pixel being processed.

Based on these weighting values, the stochastic filter 17 performs the following calculation on the ERR error values provided by the error buffer 14:

$$w_1[25_{i-1}] + w_2[24_{i-1}] + w_3[24_i] + w_4[24_{i+1}]$$

when the buffer address control circuit 13 is stepping left to right (as depicted in Fig. 2A) from storage location $22_A$ to $22_N$,

and:

$$w_1[25_{i+1}] + w_2[24_{i+1}] + w_3[24_i] + w_4[24_{i-1}]$$

when the buffer address control circuit 13 is stepping left to right (as depicted in Fig. 2A) from storage location $22_N$ to $22_A$

where the bracketed numbers indicate the contents of the respective storage locations in the error buffer 14.

It will be appreciated that the sum of the weighting values $w_1$ through $w_4$ is equal to "1", and that the weighting values are applied to the errors calculated during processing of the next adjacent pixel in the same line, and the three nearest pixels in the next previous line in the image. The two largest nominal weights, namely 7/16 and 5/16, are applied to the error values associated with the directly adjacent pixels, that is, in locations $24_{i-1}$ (or $24_{i+1}$) and $25_i$, respectively. The two smaller nominal weights, namely 3/16 and 1/16 are applied to the weights associated with the two other nearby pixels, that is, the pixels which are diagonally adjacent to the pixel associated with storage location $22_i$.

The "b" perturbation value is used for the directly adjacent pixels, and the "a" perturbation value is used for the diagonally adjacent pixels. The maximum values for the random perturbation are empirically selected to be approximately one-half of the smaller of each of the pairs of weighting values; that is, the maximum value for the "b" perturbation, that is, 1/8, is approximately one-half of 5/16, the smaller of the nominal weighting values to which the "b" perturbation is applied. Similarly, the maximum value for the "a" perturbation, that is, 1/32, is one-half of 1/16, the smaller of the nominal weighting values to which the "a" perturbation is applied. The maximum value for the "b" perturbation, namely 1/8, is actually somewhat smaller than one-half of 5/16, is selected to simplify binary arithmetic involving the perturbation.

By perturbing the weighting values used by the stochastic filter 17, and by having the buffer address control circuit 13 enable the scanning of the pixel values in the input buffer 11 in a serpentine manner, the system 10 avoids the undesirable artifacts such as the directional constructs and the unidirectional sharpening of abrupt edges which are present in the halftone images that are produced by prior processing systems, particularly in prior error diffusion systems. Thus, dithered images that are produced by the system 10 are more perceptually approximate the continuous tone images than do prior systems, most notably the prior error diffusion systems.

It will be appreciated that the system depicted in Fig. 1 may be adapted to processes color images as well as monochrome images. In particular, a color image may be taken as, generally, three monochrome images, with each monochrome image representing one of three primary colors defining the color image. The composite of the three monochrome images thus represents the original color image. Each of the three monochrome images may be separately and independently processed by the system depicted in Fig. 1 to produce a color halftone or dithered image, with the color halftone image having one bit for each primary color, and the color dithered image having only a few bits for each primary color.

It will also be appreciated that, if the modified pixel values or output pixel values have a minimum value other than zero, the quantizer 30 and normalizer 30 will also be provided with the respective minimum values, and will perform appropriate scaling and adjustment of the ranges and nominal centers in response thereto as will be apparent to those skilled in the art.

The foregoing description has been limited to a specific embodiment of this invention. It will be apparent, however, that variations and modifications may be made to the invention, with the attainment of some or all of the advantages of the invention. For example, it will be appreciated that the invention may be embodied in either hardware or software in a suitably programmed digital data processing system, both of which are readily accomplished by those of ordinary skill in the respective arts.

## Claims

1. An image processing system (10) for processing continuous tone pixel image values from a data source representing an image, the image being represented by a plurality of lines of pixels, with each line including a plurality of pixels, to produce output pixel values, said data source iteratively presenting to said system continuous tone pixel image values associated with each pixel, said system comprising:

A. error means (14) for storing error values associated with a plurality of previously-processed pixels; characterized in that said system further comprises

B. modification means (16, 17) for connection to said data source and connected to said error means for generating modified pixel values in response to the continuous tone pixel values and weighted error values associated with proximate previously processed pixels, each error value being weighted by a weight comprising a predetermined value dependent on the position of the corresponding previously processed pixel relative to the position of the currently processed pixel, said weight also comprising a relatively small perturbation value which varies from one currently processed pixel to another currently processed pixel;

C. quantization means (20, 30) connected to said modification means for receiving the modified pixel values and for generating, in response thereto, output pixel values; and

D. error generation means (21, 30, 31) connected to said quantization means, said error means and said modification means for generating, in response to the modified pixel values and said output pixel values, an error value for the pixel for storage in said error means.

2. A system as defined in claim 1 further comprising:

A. input means (11) connected to said data source including a plurality of storage locations for receiving continuous tone pixel values associated with a line of pixels;

B. output means (15) connected to said quantization means comprising a plurality of storage locations for receiving output pixel values for a line of pixels; and

C. control mean (13) connected to said input means, said output means and said error means for controlling said input means and said error means to iteratively couple contents of selected storage locations to said modification means and for controlling said output means to receive and store the output of said quantization means, the control means enabling the input means to iteratively transmit the contents of its storage

EP 0 308 464 B1

locations in alternating directions along respective lines of pixel values.

3. An image processing system as defined in claim 1 wherein said modification means includes:

A. perturbation means (17) for generating perturbation values;

B. weighting means (17) connected to said perturbation means and said error means for generating in response to said perturbation values and said error values a correction value; and

C. modified pixel value generation means (16) connected to said weighting means and for connection to said data source for generating said modified pixel values in response to said correction value and said continuous tone pixel values.

4. An image processing system as defined in claim 1 further including maximum input value identification means (26) for identifying a maximum input value and a maximum output value, identification means (27) for identifying a maximum output value, said quantization means;including correspondence means (20) or establishing a plurality of ranges of correspondence between the modified pixel values and each output pixel value and output value means (20) for establishing an output pixel value in response to a received modified pixel value and the ranges established by said correspondence means.

5. An image processing system as defined in claim 4 wherein said error generation means includes normalization means (30) connected to said quantization means, said maximum output value identification means and said maximum input value identification means for generating, in response to each output pixel value received from said quantization means; a nominal center value based on said maximum input value; said maximum output value and said output pixel value, and error means (21, 31) for determining the difference between said nominal center value and said modified pixel value, said difference constituting said error value.

6. An image processing system as defined in claim 1 wherein said output pixel values comprise halftone pixel image data, and said system further comprising:

A. input means (11) connected to said data source including a plurality of storage locations for receiving continuous tone pixel image data associated with a line of pixels; and

B. control means (13) connected to said input means and said error means for controlling said input means and said error means to iteratively couple contents of selected storage locations to said modification means, the control means enabling the input means to iteratively transmit the contents of its storage locations in alternating directions along respective alternate lines of pixel image data and wherein said modification means comprises correction means (16, 17) connected to said input means for receiving error values associated with proximate previously processed pixels and for generating modified pixel image data in response to the continous tone pixel image data and weighted error values associated with proximate previously processed pixels, each error value being weighted by a weight comprising a predetermined value dependent on the position of the corresponding previously processed pixel relative to the position of the currently processed pixel, said weight also comprising a relatively small perturbation value which varies from one currently processed pixel to another currently processed pixel.

7. An image processing system as defined in claim 6 further comprising output means (15) connected to said quantization means and said control means and comprising a plurality of storage locations each for receiving and storing the halftone pixel image data from said quantization means in response to a control signal from said control means.

8. An image processing system as defined in claim 6 wherein said correction means includes:

A. perturbation means (17) for generating perturbation values;

B. weighting means (17) connected to said perturbation means and said error means for generating in response to said perturbation values and said error values a correction value; and

C. modified pixel image data generation means (16) connected to said weighting means and said input means for generating said modified pixel image data in response to said correction value and said continuous tone pixel image data.

9. An image processing system as defined in claim 6 further including maximum input value identification means (26) for identifying a maximum input value and a maximum output value identification means (27) for identifying a maximum output value, said quantization means including correspondence means (20) for establishing a plurality of ranges of correspondence between the modified pixel values and each output pixel value and output value means (20) for establishing an output pixel value in response to a received modified pixel value and the ranges established by said correspondence means.

10. An image processing system as defined in claim 9 wherein said error generation means includes normalization means (30) connected to said quantization means, said maximum output value identification means and said maximum input value identification means for generating, in response to each output pixel value received from said quantization means, a nominal center value based on said maximum input value, said maximum output value and said output pixel value, and error means (21, 31) for determining the difference between said nominal center value and said modified pixel value, said difference constituting said error value.

8

11. An image processing system as defined in claim 7 wherein said input means comprises an input line buffer (11) connected to said data source including a plurality of input storage locations (22A-22N) each for receiving and storing continuous tone pixel image data associated with a line of pixels;

and wherein said output means comprises an output line buffer (15) including a plurality of output storage locations (23A-23N), including one output storage location for each pixel in a line;

and wherein said error means comprises an error value storage buffer (14) including a current error storage buffer (25A-25N) and a previous error storage buffer (24A-24N) each including a plurality of storage locations for storing error values, each of said storage locations in said current error storage buffer and said previous error storage buffer being associated with a pixel in a line in an image, the storage locations of said current error storage buffer storing error values associated with a current line of pixels and the storage locations of the previous error storage buffer storing error values associated with a previous line of pixels;

and wherein said correction means receives continuous tone pixel image data from a selected location of said input line buffer and error values from selected current error value storage locations and previous error value storage locations of said error value storage buffer;

and wherein said halftone image pixel data generated by said quantization means is stored in a selected output storage location in said output line buffer;

and wherein said control means comprises control means for:

(i) enabling said input line buffer to iteratively couple to said correction means the contents of input storage locations representing the continuous tone pixel image data for a pixel, the control means enabling the input means to transmit the contents of its storage locations in alternating directions along alternate lines of pixel image data;

(ii) enabling, during each iteration:

(a) said error value storage buffer to couple to said correction means the contents of current error storage locations and previous error storage locations associated with selected pixels proximate the pixel whose continuous tone pixel image data is being transmitted,

(b) said output means to receive and store the output of said quantization means in an output storage located associated with the pixel whose continuous tone pixel image data is being transmitted, and

(c) said error value storage buffer to store, in a current error value storage location associated with the pixel whose continuous tone pixel image data is being transmitted, the error value generated by said error value generation means.

12. An image processing system as defined in claim 1 wherein said perturbation value varies randomly.

13. A method of iteratively processing continuous tone pixel image values representing an image, the image being represented by a plurality of lines of pixels, with each line including a plurality of pixels, to produce output pixel values, characterized in that it comprises the steps, during each iteration, of:

A. generating a modified pixel value in response to the continuous tone pixel image value and weighted error values associated with previously processed pixels, each error value being weighted by a weight comprising a predetermined value dependent on the position of the corresponding previously processed pixel relative to the position of the currently processed pixel, said weight also comprising a relatively small perturbation value which varies from one currently processed pixel to another currently processed pixel;

B. quantizing said modified pixel value to produce an output pixel value; and

C. generating an error value in response to said output pixel value and said modified pixel value for use during subsequent iterations.

14. The method of iteratively processing continuous tone pixel image values as defined in claim 13, further comprising:

A. loading continuous tone pixel image values associated with a line of pixels into respective storage locations in an input buffer before beginning said iterations;

and wherein said generating a modified pixel value further comprises selecting a storage location in said input buffer associated with said pixel and generating a modified pixel image value in response to the continuous tone pixel image data from said selected storage location and weighted error value associated with proximate previously processed pixels, and the input buffer storage locations during succeeding iterations in connection with a line of pixels being selected so that processing proceeds sequentially through said input buffer, and processing of alternate lines of said pixels proceeds in alternate directions through said input buffer;

and wherein said error values are generated for storage in an error value storage location in an error buffer associated with the input buffer storage location.

15. The method of iteratively processing continuous tone pixel image values as defined in claim 13, wherein said perturbation value varies randomly.

**Patentansprüche**

1. Bildverarbeitungssystem (10) zum Verarbeiten von tonkontinuierlichen Bildelement-Bildwerten von einer Datenquelle, die ein Bild wiedergibt, wobei das Bild durch eine Vielzahl von Zeilen aus Bildelementen wiedergegeben ist und jede Zeile eine Vielzahl von Bildelementen aufweist, um Ausgangsbildelementwerte zu erzeugen, wobei die Datenquelle iterativ dem System tonkontinuierliche Bildelement-Bildwerte, die mit jedem Bildelement verbunden sind, zuführt und das System aufweist:

A. eine Fehlereinrichtung (14) zum Speichern von Fehlerwerten, die mit einer Vielzahl von vorher verarbeiteten Bildelementen verbunden sind; dadurch gekennzeichnet, daß das System weiterhin aufweist:

B. eine Änderungseinrichtung (16, 17), die mit der Datenquelle verbindet und die mit der Fehlereinrichtung zum Erzeugen geänderter Bildelementwerte in Antwort auf die tonkontinuierlichen Bildelement-Bildwerte und gewichteter Fehlerwerte verbunden ist, die mit benachbarten vorher verarbeiteten Bildelementen verbunden sind, wobei jeder Fehlerwert mit einer Gewichtung gewichtet wird, die einen vorgegebenen Wert aufweist, der von der Position des entsprechenden vorher verarbeiteten Bildelements relativ zu der Position des gegenwärtig verarbeiteten Bildelements abhängt, wobei die Gewichtung auch einen relativ kleinen Störwert aufweist, der von einem gegenwärtig verarbeiteten Bildelement zu einem weiteren gegenwärtig verarbeiteten Bildelement variiert;

C. eine Quantisierungseinrichtung (20, 30), die mit der Änderungseinrichtung zum Empfangen der geänderten Bildelementwerte und zum Erzeugen von Ausgangsbildelementwerten in Antwort darauf verbunden ist; und

D. eine Fehlererzeugungseinrichtung (21, 30, 31), die mit der Quantisierungseinrichtung, der Fehlereinrichtung und der Änderungseinrichtung zum Erzeugen in Antwort auf die geänderten Bildelementwerte und die Ausgangsbildelementwerte eines Fehlerwertes für das Bildelement zum Speichern in der Fehlereinrichtung verbunden ist.

2. System nach Anspruch 1, weiterhin aufweisend:

A. eine mit einer Datenquelle verbundene Eingangseinrichtung (11), welche eine Vielzahl von Speicherstellen zum Empfangen von tonkontinuierlichen Bildelementwerten aufweist, die mit einer Zeile aus Bildelementen verbunden sind;

B. eine mit der Quantisierungseinrichtung verbundene Ausgangseinrichtung (15), welche eine Vielzahl von Speicherstellen zum Empfangen von Ausgangsbild-Bildelement-Werten für eine Zeile aus Bildelementen aufweist;

C. eine Steuereinrichtung (13), die mit der Eingangseinrichtung, der Ausgangseinrichtung und der Fehlereinrichtung zum Steuern der Eingangseinrichtung und der Fehlereinrichtung verbunden ist, um iterativ Inhalte der ausgewählten Speicherstellen der Änderungseinrichtung zuzuführen, und zum steuern der Ausgangseinrichtung verbunden ist, um den Ausgang der Quantisierungseinrichtung zu empfangen und zu speichern, wobei die steuereinrichtung die Eingangseinrichtung freigibt, iterativ die Inhalte ihrer speicherstellen in abwechselnden Richtungen entlang jeweiliger Zeilen der Bildelementwerte zu übertragen.

3. Bildverarbeitungssystem nach Anspruch 1, worin die Änderungseinrichtung aufweist:

A. eine Störeinrichtung (17) zum Erzeugen von Störwerten;

B. eine Gewichtungseinrichtung (17), die mit der Störeinrichtung und der Fehlereinrichtung zum Erzeugen eines Korrekturwerts in Antwort auf die störwerte und die Fehlerwerte verbunden ist; und

C. eine Erzeugungseinrichtung (16) für geänderte Bildelementwerte, die mit der Gewichtungseinrichtung und der Datenquelle verbunden ist, zum Erzeugen der geänderten Bildelementwerte in Antwort auf den Korrekturwert und die tonkontinuierlichen Bildelementwerte.

4. Bildverarbeitungssystem nach Anspruch 1, weiterhin aufweisend eine Identifikationseinrichtung (26) für den maximalen Eingangswert zum Identifizieren eines maximalen Eingangswertes und eine Identifikationseinrichtung (27) zum Identifizieren eines maximalen Ausgangswertes, wobei die Quantisierungseinrichtung eine Korrespondenzeinrichtung (20) zum Einrichten einer Vielzahl von Korrespondenzbereichen zwischen den geänderten Bildelementwerten und jedem Ausgangsbildelementwert und eine Ausgangswerteinrichtung (20) zum Einrichten eines Ausgangsbildelementwertes in Antwort auf einen empfangenen geänderten Bildelementwert und die durch die Korrespondenzeinrichtung eingerichteten Bereiche aufweist.

5. Bildverarbeitungssystem nach Anspruch 4, worin die Fehlererzeugungseinrichtung aufweist eine Normalisierungseinrichtung (30), die mit der Quantisierungseinrichtung, der Identifikationseinrichtung für den maximalen Ausgangswert und der Identifikationseinrichtung für den maximalen Eingangswert verbunden ist und in Antwort auf jeden Ausgangsbildelementwert, der von der Quantisierungseinrichtung empfangen wird, einen Nominalzentralwert erzeugt, der auf dem maximalen Eingangswert, dem maximalen Ausgangswert und dem Ausgangsbildelementwert basiert, und eine Fehlereinrichtung (21, 31) zum Bestimmen des Unterschieds zwischen dem Nominalzentralwert und dem geänderten Bildelementwert, wobei der Unterschied den Fehlerwert bildet.

6. Bildverarbeitungssystem nach Anspruch 1, worin die Ausgangsbildelementwerte Halbton-Bildelement-Bilddaten aufweisen und das System weiterhin aufweist:

A. eine mit der Datenquellle verbundene Eingangseinrichtung (11), welche eine Vielzahl von Speicherstellen enthält, zum Empfangen von tonkontinuierlichen Bildelement-Bilddaten, die mit einer Zeile aus Bildelementen verbunden sind; und

B. eine Steuereinrichtung (13), die mit der Eingangseinrichtung und der Fehlereinrichtung zum Steuern der Eingangseinrichtung und der Fehlereinrichtung verbunden ist, um iterativ Inhalte der ausgewählten Speicherstellen der Änderungseinrichtung zuzuführen, wobei die Steuereinrichtung die Eingangseinrichtung freigibt, iterativ die Inhalte ihrer Speicherstellen in abwechselnden Richtungen entlang jeweiliger abwechselnder Zeilen aus Bildelement-Bilddaten zu übertragen, und worin die Änderungseinrichtung aufweist eine Korrektureinrichtung (16,17), die mit der Eingangseinrichtung verbunden ist, zum Empfangen von Fehlerwerten, die mit den benachbarten vorhergehend verarbeiteten Bildelementen verbunden sind, und zum Erzeugen von geänderten BildelementBilddaten in Antwort auf tonkontinuierliche Bildelement-Bilddaten und gewichtete Fehlerwerte, die mit benachbarten vorhergehend verarbeiteten Bildelementen verbunden sind, wobei jeder Fehlerwert von einer Gewichtung gewichtet wird, die einen vorgegebenen Wert aufweist, welcher von der Position des entsprechenden vorher verarbeiteten Bildelements relativ zu der Position des gegenwärtig verarbeiteten Bildelements abhängt und wobei die Gewichtung auch einen relativ kleinen Störwert aufweist, der von einem gegenwärtig verarbeiteten Bildelement zu einem anderen gegenwärtig verarbeiteten Bildelement variiert.

7. Bildverarbeitungssystem nach Anspruch 6, weiterhin aufweisend eine Ausgangseinrichtung (15), die mit der quantisierungseinrichtung und der Steuereinrichtung verbunden ist und eine Vielzahl von Speicherstellen jeweils zum Empfangen und Speichern der Halbton-Bildelement-Bilddaten von der quantisierungseinrichtung in Antwort auf ein Steuersignal der Steuereinrichtung aufweist.

8. Bildverarbeitungssystem nach Anspruch 6, worin die Korrektureinrichtung aufweist:

A. eine Störeinrichtung (17) zum Erzeugen von Störwerten

B. eine Gewichtungseinrichtung (17), die mit der Störeinrichtung und mit der Fehlereinrichtung zum Erzeugen eines Korrekturwerts in Antwort auf die Störwerte und die Fehlerwerte verbunden ist; und

C. eine Erzeugungseinrichtung (16) für geänderte BildelementBilddaten, die mit der Gewichtungseinrichtung und der Eingangseinrichtung zum Erzeugen der geänderten BildelementBilddaten in Antwort auf den Korrekturwert und die tonkontinuierlichen Bildelement-Bilddaten verbunden ist.

9. Bildverarbeitungssystem nach Anspruch 6, weiterhin aufweisend eine Identifikationseinrichtung (26) für einen maximalen Eingangswert zum Identifizieren eines maximalen Eingangswertes und eine Identifikationseinrichtung (27) für einen maximalen Ausgangswert zum Identifizieren eines maximalen Ausgangswertes, wobei die Quantisierungseinrichtung eine Korrespondenzeinrichtung (20) zum Einrichten einer Vielzahl von Korrespondenzbereichen der Korrespondenz zwischen den geänderten Bildelementwerten und jedes Ausgangsbildelementwertes und eine Ausgangswerteinrichtung (20) zum Einrichten eines Ausgangsbildelementertes in Antwort auf einen empfangenen geänderten Bildelementwert und die von der Korrespondenzeinrichtung eingerichteten Bereiche aufweist.

10. Bildverarbeitungssystem nach Anspruch 9, worin die Fehlererzeugungseinrichtung aufweist eine Normalisierungseinrichtung (30), die mit der Quantisierungseinrichtung, der Identifikationseinrichtung für den maximalen Ausgangswert und der Identifikationseinrichtung für den maximalen Eingangswert verbunden ist und in Antwort auf jeden Ausgangsbildelementwert, der von der Quantisierungseinrichtung empfangen wird, einen Nominalzentralwert erzeugt, der auf dem maximalen Eingangswert, dem maximalen Ausgangswert und dem Ausgangsbildelementwert beruht, und eine Fehlereinrichtung (21, 31) zum Bestimmen des Unterschieds zwischen dem Nominalzentralwert und dem geänderten Bildelementwert, wobei die Differenz den Fehlerwert bildet.

11. Bildverarbeitungssystem nach Anspruch 7, worin die Eingangseinrichtung einen mit der Datenquelle verbundenen Eingangszeilenpuffer (11) aufweist, welcher eine Vielzahl von Eingangsspeicherstellen (22A-22N) jeweils zum Empfangen und Speichern von tonkontinuierlichen Bildelement-Bilddaten aufweist, die mit einer Bildelementzeile verbunden sind;

und worin die Ausgangseinrichtung einen Ausgangszeilenpuffer (15) aufweist, der eine Vielzahl von Ausgangsspeicherstellen (23A-23N) enthält, und zwar eine Ausgangsspeicherstelle für jedes Bildelement in einer Zeile enthält;

und worin die Fehlereinrichtung aufweist einen FehlerwertSpeicher-Puffer (14), der einen Speicherpuffer (25A-25N) für den gegenwärtigen Fehler und einen Speicherpuffer (24A-24N) für den vorhergehenden Fehler aufweist, von denen jeder eine Vielzahl von Speicherstellen zum Speichern der Fehlerwerte enthält, wobei jede der Speicherstellen in dem Speicherpuffer für den gegenwärtigen Fehler und in dem Speicherpuffer für den vorhergehenden Fehler mit einem Bildelement in einer Zeile des Bildes verbunden ist und wobei die Speicherstellen des Speicherpuffers für den gegenwärtigen Fehler Fehlerwerte speichert, die mit einer gegenwärtigen Zeile von Bildelementen verbunden sind, und wobei die Speicherstellen des Speicherpuffers für den vorhergehenden Fehler Fehlerwerte speichert, die mit einer vorhergehenden Zeile der Bildelemente verbunden sind;

und worin die Korrektureinrichtung tonkontinuierliche Bildelement-Bilddaten von einer ausgewählten Stelle des Eingangszeilenpuffers und Fehlerwerte aus ausgewählten Speicherstellen für den gegenwärtigen Fehlerwert und Speicherstellen für den vorhergehenden Fehlerwert des Fehlerwert-Speicher-Puffers empfängt;

und worin die Halbton-Bildelement-Bilddaten, die von der Quantisierungseinrichtung erzeugt werden, in einer ausgewählten Ausgangsspeicherstelle des Ausgangszeilenpuffers gespeichert sind;

und worin die Steuereinrichtung eine Steuereinrichtung aufweist zum:

(i) Freigeben des Eingangszeilenpuffers, um iterativ die Inhalte der Eingangsspeicherstellen, die die tonkontinuierlichen Bildelement-Bilddaten für ein Bildelement darstellen, mit der Korrektureinrichtung zu koppeln, wobei die Steuereinrichtung die Eingangseinrichtung freigibt, die Inhalte ihrer Speicherstellen in abwechselnden Richtungen entlang abwechselnder Zeilen der Bildelement-Bilddaten zu übertragen;

(ii) Freigeben während jeder Iteration:

(a) des Fehlerwert-Speicher-Puffers, um die Inhalte der Speicherstellen für den gegenwärtigen Fehler und der Speicherstellen für den vorhergehenden Fehler, die mit den ausgewählten Bildelementen verbunden sind, welche benachbart zu dem Bildelement sind, dessen tonkontinuierliche Bildelement-Bilddaten übertragen werden, mit der Korrektureinrichtung zu koppeln,

(b) der Ausgangseinrichtung, um den Ausgang der Quantisierungseinrichtung in einem Ausgangsspeicher zu empfangen und zu speichern, der mit dem Bildelement verbunden ist, dessen tonkontinuierliche Bildelement-Bilddaten übertragen werden, und

(c) des Fehlerwert-Speicher-Puffers, um in einer Speicherstelle für den gegenwärtigen Fehlerwert, die mit dem Bildelement verbunden ist, dessen tonkontinuierliche BildelementBilddaten übertragen werden, den Fehlerwert, der von der Fehlerwerterzeugungseinrichtung erzeugt wird, zu speichern.

12. Bildverarbeitungssystem nach Anspruch 1, worin der Störwert zufallsmäßig variiert.

13. Verfahren zum iterativen Verarbeiten von tonkontinuierlichen Bildelement-Bildwerten, die ein Bild wiedergeben, wobei das Bild durch eine Vielzahl von Zeilen aus Bildelementen wiedergegeben ist und jede Zeile eine Vielzahl von Bildelementen aufweist, um Ausgangsbildelementwerte zu erzeugen, dadurch gekennzeichnet, daß es die folgenden Schritte während jeder Iteration aufweist:

A. Erzeugen eines geänderten Bildelementwertes in Antwort auf einen tonkontinuierlichen Bildelement-Bildwert und gewichtete Fehlerwerte, die mit dem vorhergehend verarbeiteten Bildelement verbunden sind, wobei jeder Fehlerwert durch eine Gewichtung gewichtet wird, die einen vorgegebenen Wert aufweist, der von der Position des entsprechenden vorhergehend verarbeiteten Bildelements relativ zu der Position des gegenwärtig verarbeiteten Bildelements abhängt, wobei die Gewichtung auch einen relativ kleinen Störwert aufweist, der von einem gegenwärtig verarbeiteten Bildelement zu einem anderen gegenwärtig verarbeiteten Bildelement variiert;

B. Quantisieren des geänderten Bildelementwerts, um einen Ausgangsbildelementwert zu erzeugen;

C. Erzeugen eines Fehlerwerts in Antwort auf den Ausgangsbildelementwert und den geänderten Bildelementwert zum Einsatz während nachfolgender Iterationen.

14. Verfahren zum iterativen Verarbeiten von tonkontinuierlichen Bildelement-Bildwerten nach Anspruch 13, weiterhin aufweisend:

A. Laden von tonkontinuierlichen Bildelement-Bildwerten, die mit einer Bildelementzeile verbunden sind, in jeweilige Speicherstellen in einem Eingangspuffer, bevor die Iterationen beginnen;

und worin das Erzeugen eines geänderten Bildelementwertes weiterhin aufweist das Auswählen einer Speicherstelle in dem Eingangspuffer, die mit dem Bildelement verbunden ist, und das Erzeugen eines geänderten Bildelement-Bildwertes in Antwort auf die tonkontinuierlichen Bildelement-Bilddaten von der ausgewählten Speicherstelle und in Antwort auf den gewichteten Fehlerwert, der mit dem benachbarten vorher verarbeiteten Bildelementen verbunden ist, wobei die Eingangspufferspeicherstellen während hintereinanderfolgender Iterationen in Verbindung mit einer Bildelementzeile so ausgewählt werden, daß die Verarbeitung sequentiell durch den Eingangspuffer fortschreitet, und wobei das Verarbeiten abwechselnder Zeilen der Bildelemente in abwechselnden Richtungen durch den Eingangspuffer fortschreitet;

und worin die Fehlerwerte zum Speichern in einer FehlerwertSpeicherstelle in einem Fehlerspeicher erzeugt werden, der mit der Eingangspufferspeicherstelle verbunden ist.

15. Verfahren zum iterativen Verarbeiten von tonkontinuierlichen Bildelement-Bildwerten nach Anspruch 13, worin der Störwert zufällig variiert.

EP 0 308 464 B1

## Revendications

1. Système de traitement d'image (10) destiné à traiter des valeurs d'image de pixel en demi-teinte à partir d'une source de données représentant une image, l'image étant représentée par plusieurs lignes de pixels, avec chaque ligne comprenant plusieurs pixels, de façon à produire des valeurs de pixel de sortie, ladite source de données présentant de manière itérative au dit système des valeurs d'image de pixel en demi-teinte associées à chaque pixel, ledit système comportant :

A. des moyens d'erreur (14) destinés à stocker des valeurs d'erreur associées à plusieurs pixels précédemment traités; caractérisé en ce que ledit système comporte en outre

B. des moyens de modification (16, 17) destinés à être reliés à ladite source de données et reliés aux dits moyens d'erreur afin de générer des valeurs de pixel modifiées en réponse aux valeurs de pixel en demi-teinte et des valeurs d'erreur pondérées associées aux pixels proches précédemment traités, chaque valeur d'erreur étant pondérée par un élément de pondération comportant une valeur prédéterminée dépendant de la position du pixel correspondant précédemment traité par rapport à la position du pixel en cours de traitement, ledit élément de pondération comportant également une valeur de perturbation relativement faible qui varie d'un pixel en cours de traitement à un autre pixel en cours de traitement;

C. des moyens de quantification (20, 30) reliés aux dits moyens de modification afin de recevoir les valeurs de pixel modifiées et afin de générer, en réponse à cela, des valeurs de pixel de sortie; et

D. des moyens de génération d'erreur (21, 30, 31) reliés aux dits moyens de quantification, aux dits moyens d'erreur et aux dits moyens de modification afin de générer, en réponse aux valeurs de pixel modifiées et aux dites valeurs de pixel de sortie, une valeur d'erreur pour le pixel pour stockage dans lesdits moyens d'erreur.

2. Système selon la revendication 1, comportant en outre :

A. des moyens d'entrée (11) reliés à ladite source de données comprenant plusieurs emplacements de stockage destinés à recevoir des valeurs de pixel en demi-teinte associées à une ligne de pixel;

B. des moyens de sortie (15) reliés aux dits moyens de quantification comprenant plusieurs emplacements de stockage destinés à recevoir des valeurs de pixel de sortie pour une ligne de pixels; et

C. des moyens de commande (13) reliés aux dits moyens d'entrée, aux dits moyens de sortie et aux dits moyens d'erreur afin de commander lesdits moyens d'entrée et lesdits moyens d'erreur de façon à relier de manière itérative des contenus d'emplacements de stockage sélectionnés aux dits moyens de modification et afin de commander lesdits moyens de sortie de façon à recevoir et stocker la sortie des dits moyens de quantification, les moyens de commande permettant aux moyens d'entrée de transmettre de manière itérative les contenus de ses emplacements de stockage dans des directions alternées le long de lignes respectives de valeurs de pixel.

3. Système de traitement d'image selon la revendication 1, dans lequel lesdits moyens de modification comprennent :

A. des moyens de perturbation (17) destinés à générer des valeurs de perturbation;

B. des moyens de pondération (17) reliés aux dits moyens de perturbation et aux dits moyens d'erreur afin de générer une valeur de correction en réponse aux dites valeurs de perturbation et aux dites valeurs d'erreur; et

C. des moyens de génération de valeur de pixel modifiée (16) reliés aux dits moyens de pondération et destinés à être reliés à ladite source de données afin de générer des dites valeurs de pixel modifiées en réponse à ladite valeur de correction et aux dites valeurs de pixel en demi-teinte.

4. Système de traitement d'image selon la revendication 1, comportant en outre des moyens d'identification de valeur d'entrée maximum (26) destinés à identifier une valeur d'entrée maximum et des moyens d'identification de valeur de sortie maximum (27) destinés à identifier une valeur de sortie maximum, lesdits moyens de quantification comprenant des moyens de correspondance (20) destinés à établir plusieurs plages de correspondance entre les valeurs de pixel modifiées et chaque valeur de pixel de sortie et des moyens de valeur de sortie (20) destinés à établir une valeur de pixel de sortie en réponse à une valeur de pixel modifiée reçue et aux plages établies par lesdits moyens de correspondance.

5. Système de traitement d'image selon la revendication 4, dans lequel lesdits moyens de génération d'erreur comprennent des moyens de normalisation (30) reliés aux dits moyens de quantification, aux dits moyens d'identification de valeur de sortie maximum et aux dits moyens d'identification de valeur d'entrée maximum afin de générer, en réponse à chaque valeur de pixel de sortie reçue des dits moyens de quantification, une valeur centrale nominale basée sur ladite valeur d'entrée maximum, ladite valeur de sortie maximum et ladite valeur de pixel de sortie, et des moyens d'erreur (21, 31) destinés à déterminer la différence entre ladite valeur centrale nominale et ladite valeur de pixel modifiée, ladite différence constituant ladite valeur d'erreur.

6. Système de traitement d'image selon la revendication 1, dans lequel lesdites valeurs de pixel de sortie

13

comportent des données d'image de pixel en demi-teinte, et ledit système comportant en outre :

A. des moyens d'entrée (11) reliés à ladite source de données comprenant plusieurs emplacements de stockage destinés à recevoir des données d'image de pixel en demi-teinte associées à une ligne de pixel; et

B. des moyens de commande (13) reliés aux dits moyens d'entrée et aux dits moyens d'erreur afin de commander lesdits moyens d'entrée et lesdits moyens d'erreur de façon à relier de maniére itérative des contenus d'emplacements de stockage sélectionnés aux dits moyens de modification, les moyens de commande permettant aux dits moyens d'entrée de transmettre de manière itérative les contenus de ses emplacements de stockage dans des directions alternées le long de lignes alternées respectives de données d'image de pixel, et dans lequel lesdits moyens de modification comportent des moyens de correction (16, 17) reliés aux dits moyens d'entrée afin de recevoir des valeurs d'erreur associées aux pixels proches précédemment traités et afin de générer des données d'image de pixel modifiées en réponse aux données d'image de pixel en demi-teinte et aux valeurs d'erreur pondérées associées aux pixels proches précédemment traités, chaque valeur d'erreur étant pondérée par un élément de pondération comportant une valeur prédéterminée dépendant de la position du pixel correspondant précédemment traité par rapport à la position du pixel en cours de traitement, ledit élément de pondération comportant également une valeur de perturbation relativement faible qui varie d'un pixel en cours de traitement à un autre pixel en cours de traitement.

7. Système de traitement d'image selon la revendication 6, comportant en outre des moyens de sortie (15) reliés aux dits moyens de quantification et aux dits moyens de commande et comprenant plusieurs emplacements de stockage destinés chacun à recevoir et stocker les données d'image de pixel en demi-teinte provenant des dits moyens de quantification en réponse à un signal de commande provenant des dits moyens de commande.

8. Système de traitement d'image selon la revendication 6, dans lequel lesdits moyens de correction comprennent :

A. des moyens de perturbation (17) destinés à générer des valeurs de perturbation;

B. des moyens de pondération (17) reliés aux dits moyens de perturbation et aux dits moyens d'erreur afin de générer une valeur de correction en réponse aux dites valeurs de perturbation et aux dites valeurs d'erreur; et

C. des moyens de génération de données d'image de pixel modifiées (16) reliés aux dits moyens de pondération et aux dits moyens d'entrée afin de générer lesdites données d'image de pixel modifiées en réponse à ladite valeur de correction et aux dites données d'image de pixel en demi-teinte.

9. Système de traitement d'image selon la revendication 6, comportant en outre des moyens d'identification de valeur d'entrée maximum (26) destinés à identifier une valeur d'entrée maximum et des moyens d'identification de valeur sortie maximum (27) destinés à identifier une valeur de sortie maximum, lesdits moyens de quantification comprenant des moyens de correspondance (20) destinés à établir plusieurs plages de correspondance entre les valeurs de pixel modifiées et chaque valeur de pixel de sortie et des moyens de valeur de sortie (20) destinés à établir une valeur de pixel de sortie en réponse à une valeur de pixel modifiée reçue et aux plages établies par lesdits moyens de correspondance.

10. Système de traitement d'image selon la revendication 9, dans lequel lesdits moyens de génération d'erreur comprennent des moyens de normalisation (30) reliés aux dits moyens de quantification, aux dits moyens d'identification de valeur de sortie maximum et aux dits moyens d'identification de valeur d'entrée maximum afin de générer, en réponse à chaque valeur de pixel de sortie reçue des dits moyens de quantification, une valeur centrale nominale basée sur ladite valeur d'entrée maximum, ladite valeur de sortie maximum et ladite valeur de pixel de sortie, et des moyens d'erreur (21, 31) destinés à déterminer la différence entre ladite valeur centrale nominale et ladite valeur de pixel modifiée, ladite différence constituant ladite valeur d'erreur.

11. Système de traitement d'image selon la revendication 7, dans lequel lesdits moyens d'entrée comportent un tampon de ligne d'entrée (11) relié à ladite source de données comprenant plusieurs emplacements de stockage d'entrée (22A à 22N) destinés chacun à recevoir et stocker des données d'image de pixel en demi-teinte associées à une ligne de pixel;

et dans lequel lesdits moyens de sortie comportent un tampon de ligne de sortie (15) comprenant plusieurs emplacements de stockage de sortie (23A à 23N), comprenant un emplacement de stockage de sortie pour chaque pixel dans une ligne;

et dans lequel lesdits moyens d'erreur comprennent un tampon de stockage de valeur d'erreur (14) comprenant un tampon de stockage d'erreur courante (25A à 25N) et un tampon de stockage d'erreur précédente (24A à 24N) comprenant chacun plusieurs emplacements de stockage destinés à stocker des valeurs d'erreur, chacun des dits emplacements de stockage dans ledit tampon de stockage d'erreur courante et ledit tampon de stockage d'erreur précédente étant associé à un pixel dans une ligne dans une image, les emplacements de stockage dudit tampon de stockage d'erreur courante stockant des valeurs d'erreur associées à une ligne courante de pixels et les emplacements de stockage du tampon de stockage d'erreur précédente stockant des valeurs d'erreur associées à une ligne précédente de pixels;

et dans lequel lesdits moyens de correction reçoivent des données d'image de pixel en demi-teinte provenant d'un emplacement sélectionné dudit tampon de ligne d'entrée et des valeurs d'erreur provenant d'emplacements de stockage de valeur d'erreur courante et d'emplacements de stockage de valeur d'erreur précédente sélectionnés dudit tampon de stockage de valeur d'erreur;

et dans lequel lesdites données de pixel d'image en demi-teinte générées par lesdits moyens de quantification sont stockées dans un emplacement de stockage de sortie sélectionné dans ledit tampon de ligne de sortie;

et dans lequel lesdits moyens de commande comprennent des moyens de commande destinés à :

(i) permettre audit tampon de ligne d'entrée de relier de manière itérative aux dits moyens de correction les contenus d'emplacements de stockage d'entrée représentant les données d'image de pixel en demi-teinte pour un pixel, les moyens de commande permettant aux moyens d'entrée de transmettre les contenus de ses emplacements de stockage dans des directions alternées le long de lignes alternées de données d'image de pixel;

(ii) permettre pendant chaque itération :

(a) audit tampon de stockage de valeur d'erreur de relier aux dits moyens de correction les contenus d'emplacements de stockage d'erreur courante et d'emplacements de stockage d'erreur précédente associés aux pixels sélectionnés proches du pixel dont les données d'image de pixel en demi-teinte sont transmises;

(b) aux dits moyens de sortie de recevoir et stocker la sortie des dits moyens de quantification dans un emplacement de stockage de sortie associé au pixel dont les données d'image de pixel en demi-teinte sont transmises; et

(c) audit tampon de stockage de valeur d'erreur de stocker, dans un emplacement de stockage d'erreur courante associé au pixel dont les données d'image de pixel en demi-teinte sont transmises, la valeur d'erreur générée par lesdits moyens de génération de valeur d'erreur.

12. Système de traitement d'image selon la revendication 1, dans lequel ladite valeur de perturbation varie de manière aléatoire.

13. Procédé de traitement de manière itérative de valeurs d'image de pixel en demi-teinte représentant une image, l'image étant représentée par plusieurs lignes de pixels, avec chaque ligne comprenant plusieurs pixels, de façon à produire des valeurs de pixel de sortie, caractérisé en ce qu'il comporte les étapes, pendant chaque itération, de :

A. génération d'une valeur de pixel modifiée en réponse à la valeur d'image de pixel en demi-teinte et de valeurs d'erreur pondérées associées aux pixels précédemment traités, chaque valeur étant pondérée par un élément de pondération comportant une valeur prédéterminée dépendant de la position du pixel correspondant précédemment traité par rapport à la position du pixel en cours de traitement, ledit élément de pondération comportant également une valeur de perturbation relativement faible qui varie d'un pixel en cours de traitement à un autre pixel en cours de traitement;

B. quantification de ladite valeur de pixel modifiée afin de produire une valeur de pixel de sortie; et

C. génération d'une valeur d'erreur en réponse à ladite valeur de pixel de sortie et à ladite valeur de pixel modifiée afin d'être utilisée dans des itérations suivantes.

14. Procédé de traitement de manière itérative de valeurs d'image de pixel en demi-teinte selon la revendication 13, comportant en outre :

A. le chargement de valeurs d'image de pixel en demi-teinte associées à une ligne de pixels dans des emplacements de stockage respectifs dans un tampon d'entrée avant de commencer lesdites itérations;

et dans lequel ladite génération d'une valeur de pixel modifiée comporte en outre la sélection d'un emplacement de stockage dans ledit tampon d'entrée associé audit pixel et la génération d'une valeur d'image de pixel modifiée en réponse aux données d'image de pixel en demi-teinte provenant dudit emplacement de stockage sélectionné et à une valeur d'erreur pondérée associée aux pixels proches précédemment traités, et des emplacements de stockage de tampon d'entrée pendant des itérations successives en liaison avec une ligne de pixels qui est sélectionnée de telle sorte que le traitement se fasse de manière séquentielle dans ledit tampon d'entrée, et le traitement de lignes alternées des dits pixels se fait dans des directions alternées dans ledit tampon d'entrée;

et dans lequel lesdites valeurs d'erreur sont générées pour un stockage dans un emplacement de stockage de valeur d'erreur dans un tampon d'erreur associé à l'emplacement de stockage de tampon d'entrée.

15. Procédé de traitement de manière itérative de valeurs d'image de pixel en demi-teinte selon la revendication 13, dans lequel ladite valeur de perturbation varie de manière aléatoire.

FIG. 1

22A+I

22A 22i 22N-I

22N

INPUT BUFFER II

FIG.2A

23A+I

23A 23i 23N-I

23N

OUTPUT BUFFER I5

FIG.2B

24i-I 24i+I

24A 24i 24N

24A

24N

25A 25i-I 25i 25i+I 25N

ERROR BUFFER

FIG.2C